# EUROPÄISCHE PATENTSCHRIFT

(11) **EP 0 241 696 B1**
(45) Veröffentlichungstag und Bekanntmachung des Hinweises auf die Patenterteilung: **14.07.1993**
(21) Anmeldenummer: 87103197.7
(22) Anmeldetag: 07.03.1987
(51) Int. Cl.: C09B 57/06, G11B 7/24

(54) **Naphtholactamfarbstoffe und diese ethaltendes optisches Aufzeichnungsmedium**
Naphtholactam dyes and optical recording carrier containing them
Colorants naphtolactames et support d'enregistrement optique les contenant

(30) Priorität: 12.03.1986 DE 3608214
(43) Veröffentlichungstag der Anmeldung: 21.10.1987
(73) Patentinhaber: BASF Aktiengesellschaft, 67063 Ludwigshafen (DE)
(72) Erfinder: Dust, Matthias, Dr., D-6800 Mannheim 1 (DE); Neumann, Peter, Dr., D-6908 Wiesloch (DE); Schefczik, Ernst, Dr., D-6700 Ludwigshafen (DE); Benthack-Thoms, Heidi, Dr., D-6703 Limburgerhof (DE); Barzynski, Helmut, Dr., D-6702 Bad Duerkheim (DE); Schomann, Klaus-Dieter, Dr., D-6700 Ludwigshafen (DE); Kuppelmaier, Harald, Dr., D-6900 Heidelberg (DE); Koester, Eberhard, Dr., D-6710 Frankenthal (DE)

(56) Entgegenhaltungen:
- CHEMICAL ABSTRACTS, Band 96, Nr. 26, 1982, Seite 85, Zusammenfassung Nr. 219248c, Columbus, Ohio, US; F.A. MIKHAILENKO et al.: "Effect of polar substituents and polymethine chain length on the color of cyanine dyes of the benz[cd]indole series"
- CHEMICAL ABSTRACTS, Band 79, Nr. 4, 30. Juli 1973, Seite 89, Zusammenfassung Nr. 20287h, Columbus, Ohio, US; Y.B. SHTEINBERG et al.: "Benzo[c,d]indolecarbocyanines"
- Derwent Kurzreferat 43459B/23 der SU-A-613692

## Beschreibung

Die vorliegende Erfindung betrifft neue Naphtholactamfarbstoffe sowie ein optisches Aufzeichnungsmedium, enthaltend mindestens einen Naphtholactamfarbstoff und einen Träger.

Aufzeichnungsmaterialien, die mit Strahlen hoher Energiedichte, z.B. Laserlicht, eine lokal begrenzte Zustandsänderung erfahren, sind bekannt. Mit dieser thermisch ausgelösten Zustandsänderung, z.B. Verdampfen, Änderung des Fließverhaltens oder Ausbleichen, ist eine Änderung der optischen Eigenschaften, z.B. der Absorption durch Änderung des Absorptionsmaximums oder der Extinktion verbunden, welche zur Informations- oder Datenaufzeichnung ausgenutzt werden kann.

Wegen der geringen Größe des Bauelementes, seines geringen Energiebedarfs und der Möglichkeit der direkten Modulation der optischen Ausgangsleistung durch Modulation des elektrischen Antriebstromes eignen sich festkörperInjektionslaser, die im nahen Infrarot emittieren, vor allem der AlGaAs-Laser, der im Wellenlängenbereich zwischen etwa 750 und 950 nm arbeitet, besonders gut als Lichtquelle für ein optisches Aufnahmesystem.

Für diese Anwendung ist eine große Anzahl von anorganischen und organischen Materialien bekannt, die im betreffenden Wellenlängenbereich eine ausreichende Absorption aufweisen, und die ihre optischen Eigenschaften durch Absorption der Strahlung und damit der darin enthaltenen Energie im angegebenen Wellenlängenbereich durch Ablösen, Verdampfen, Schmelzen oder in anderer Weise verändern.

Die bekannten Informationsaufzeichnungsmaterialien bestehen aus einem Träger, auf den dünne Schichten von anorganischen Materialien, z.B. Metalle, Halbmetalle, Legierungen oder Chalkogenglas oder organischen Verbindungen, z.B. IR-Farbstoffe, aufgebracht sind. Die dünnen Schichten werden vor allem durch Aufdampfen im Vakuum oder durch Zerstäubungstechniken erzeugt. Die Dicke der Schichten sollte so gewählt werden, daß die gesamte eingestrahlte Strahlung absorbiert wird, es sei denn, daß Interferenzphänomene ausgenutzt werden sollen. Der Träger kann aus Glas oder einem geeigneten Kunststoff, z.B. Polycarbonat, Polymethylmethacrylat, Polystyrol, Polystyrol-Copolymere, Polyvinylchlorid oder Polymethylpenten, bestehen.

Für die Anwendung als Speichermedium ist es erforderlich, daß sich die amorphen Schichten über längere Zeiträume nicht verändern.

Alterungsprozesse, z.B. Kristallisation oder Ausbleichen durch Licht und Wärme, welche die Morphologie der Speicherschicht verändern, treten bei dünnen, aufgedampften Schichten relativ häufig auf. Neutrale IR-Farbstoffe in Polymerfilmen, ionogene IR-Farbstoffe in verlackter Form oder an Polymere chemisch gebundene IR-Chromophore sollten über längere Zeiträume stabil sein. Außerdem haben letztere den Vorteil eines wirtschaftlicheren Herstellungsverfahrens.

Optische Aufzeichnungsmedien für den Betrieb mit Halbleiter-Injektionslasern sind in großem Umfang hinsichtlich Trägermaterial, Reflektormaterial und laserlichtempfindlicher Schicht bekannt. Als organische IR-Farbstoffe werden insbesondere Phthalocyaninverbindungen, Methin-Farbstoffe und Quadratsäure-Derivate beschrieben.

Aus der US-A-4 242 689 ist ein Aufzeichnungsträger bekannt, der Di-indenoperylen als lichtabsorbierende Schicht enthält. Dieser Träger kann mit einem Argonlaser beschrieben werden.

In der US-A-4 023 185 werden Aufzeichnungsträger beschrieben, bei denen die lichtabsorbierende Schicht durch Verdampfen der Farbstoffe C.I. Solvent Black 3 und C.I. Nr. 26 150 erzeugt wird. Diese Aufzeichnungsträger können mit einem Argonlaser beschrieben werden.

Aus der US-A-4 380 769 sind weitere mit einem Argonlaser beschreibbare Aufzeichnungsträger bekannt, die in der lichtabsorbierenden Schicht bzw. als lichtabsorbierende Schicht Azofarbstoffe und/oder Cumarinverbindungen in einem polymeren Bindemittel enthalten.

Die DE-A-3 007 296 behandelt ein System zur Datenaufzeichnung, das einen an ein Polymer gebundenen indigoiden photochromen Farbstoff mit einem Absorptionsmaximum bei 545 nm enthält.

Weiterhin sind optische Speichersysteme bekannt, die als absorbierende Verbindungen Oxazine (JP-A-132 231/1983), Cyaninfarbstoffe (JP-A-112 790/1983 und 125 246/1983), und Phthalocyaninverbindungen (EP-A-84 729, US-A-4 241 355, JP-A-56 892/1983 enthalten. Diese Speicher können mit einem He-Ne-Laser (633 nm) beschrieben werden.

Schließlich ist in der DE-A-3 014 677 ein optisches Aufzeichnungsmedium beschrieben, das als Farbstoff 1,4-Diamino-2-methoxy-anthrachinon, in einer Polymermatrix gelöst, enthält.

Materialien, die als lichtabsorbierende Schicht des Aufzeichnungsträgers verwendet werden sollen, müssen in Form einer dünnen, glatten Schicht hoher optischer Qualität und vorbestimmter Dicke auf geeignete Träger aufzubringen sein. Die Materialien müssen ferner bei der Wellenlänge der verwendeten Lichtquelle absorbieren und hinreichend empfindlich sein, d.h. bei Einstrahlung von Lichtpulsen von wenigen nJ Energiegehalt oder darunter, die auf Brennpunktdurchmesser von ca. ≦ 1 µm Durchmesser fokussiert sind, ihre optischen Eigenschaften im bestrahlten Bereich in einer der oben beschriebenen Weisen ändern.

Aufgabe der vorliegenden Erfindung war es, neue Naphtholactamfarbstoffe sowie optische Aufzeichnungsmedien, enthaltend Naphtholactamfarbstoffe als Licht absorbierende Schichten, zur Verfügung zu stellen, die den oben genannten Anforderungen genügen, die außerdem einfach herzustellen, über einen langen Zeitraum hinweg stabil sowie korrosionsfrei und ungiftig sind. Außerdem sollten diese Aufzeichnungsmedien mittels Halbleiter-Laser beschrieben und gelesen werden können.

Es wurde gefunden, daß sehr gute für das Beschreiben und Lesen mittels eines Halbleiter-Lasers geeignete optische Aufzeichnungsmedien aus einem Träger und einer gegenüber Laserlicht empfindlichen, Farbstoff enthaltenden Schicht aus einem Polymeren vorliegen, wenn das Polymere mindestens einen Farbstoff der Formel Ib 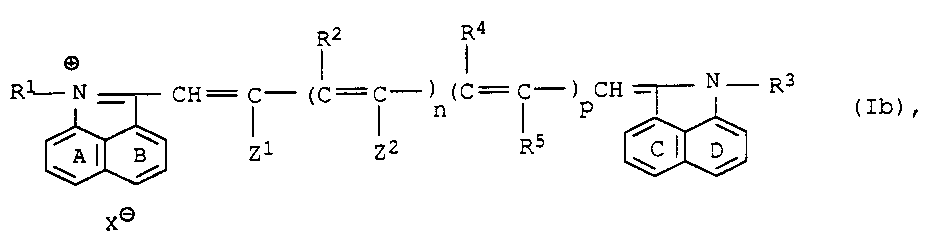
enthält, in der
- R¹ und R³: gleich oder verschieden sind und unabhängig voneinander jeweils gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes und/oder durch Sauerstoffatome unterbrochenes C₁-C₂₀-Alkyl, gegebenenfalls durch C₁-C₄-Alkyl oder Halogen substituiertes C₅-C₇-Cycloalkyl oder gegebenenfalls durch C₁-C₄-Alkyl, C₁-C₄-Alkoxy, Halogen oder C₁-C₄-Dialkylamino substituiertes Phenyl,
- R², R⁴ und R⁵: gleich oder verschieden sind und unabhängig voneinander jeweils Wasserstoff, gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes C₁-C₆-Alkyl, gegebenenfalls durch C₁-C₄-Alkyl oder Halogen substituiertes C₅-C₆-Cycloalkyl, gegebenenfalls durch C₁-C₄-Alkyl, C₁-C₄-Alkoxy, Halogen oder C₁-C₄-Dialkylamino substituiertes Phenyl, C₁-C₆-Alkoxycarbonyl, C₁-C₆-Carboxyalkyl, Hydroxy, C₁-C₄-Alkoxy oder Halogen,
- n: 0 oder 1,
- p: unabhängig von n 0, 1 oder 2,
- Z¹ und Z²: jeweils Wasserstoff oder für den Fall, daß n für 1 steht, zusammen auch eine gegebenenfalls durch C₁-C₄-Alkyl substituierte C₂-C₃-Alkylenkette oder eine oder zwei Carbonylgruppen und
- X^{⊖}: ein Anion bedeuten und in der
die Ringe A, B, C und D gegebenenfalls C₁-C₄-Alkyl, Phenyl C₁-C₄-Alkoxy, C₁-C₂₀-Alkylthio, Halogen, Nitro, Cyano, C₁-C₄-Mono- oder Dialkylamino, C₁-C₄-Alkylsulfonyl, C₁-C₄-Alkoxysulfonyl, Phenylsulfonyl, C₁-C₄-Alkylphenylsulfonyl, Hydroxysulfonyl, Anilino, C₁-C₄-Alkylanilino, C₁-C₄-Alkanoyl, C₁-C₄-Alkanoylamino, C₁-C₄-Alkoxycarbonyl, C₁-C₄-Alkoxycarbonylamino, Carbamoyl, C₁-C₄-N-Mono- oder N,N-Dialkylcarbamoyl, Sulfamoyl, C₁-C₄-N-Mono- oder N,N-Dialkylsulfamoyl, Ureido, durch C₁-C₄-Alkyl substituiertes Ureido, Phenoxy, Phenylthio oder den Rest 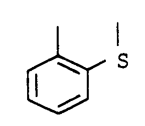
substituiert oder benzoanelliert sind.

Naphtholactamfarbstoffe der Formel Ia 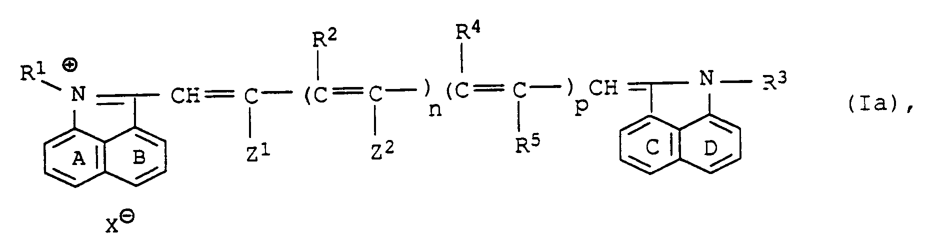
in der
- R¹ und R³: gleich oder verschieden sind und unabhängig voneinander jeweils gegebenenfalls durch Phenyl, Halogen, C¹-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes und/oder durch Sauerstoffatome unterbrochenes C₄-C₂₀-Alkyl, gegebenenfalls durch C₁-C₄-Alkyl oder Halogen substituiertes C₅-C--Cycloalkyl oder gegebenenfalls durch C₁-C₄-Alkyl, C₁-C₄-Alkoxy, Halogen oder C₁-C₄-Dialkylamino substituiertes Phenyl,
- R², R⁴ und R⁵: gleich oder verschieden sind und unabhängig voneiander jeweils Wasserstoff, gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes C₁-C₆-Alkyl, gegebenenfalls durch C₁-C₄-Alkyl oder Halogen substituiertes C₅-C₆-Cycloalkyl, gegebenenfalls durch C₁-C₄-Alkyl, C₁-C₄-Alkoxy, Halogen oder C₁-C₄-Dialkylamino substituiertes Phenyl, C₁-C₆-Alkoxycarbonyl, C₁-C₆-Carboxyalkyl, Hydroxy, C₁-C₄-Alkoxy oder Halogen,
- n: 0 oder 1,
- Z¹ und Z²: jeweils Wasserstoff oder für den Fall, daß n für 1 steht, zusammen auch eine gegebenenfalls durch C₁-C₄-Alkyl substituierte C₂-C₃-Alkylenkette oder eine oder zwei Carbonylgruppen und
- X^{⊖}: ein Anion bedeuten, und in der
die Ringe A, B, C und D gegebenenfalls durch C₁-C₄-Alkyl, Phenyl C₁-C₄-Alkoxy, C₁-C₂₀-Alkylthio, Halogen, Nitro, Cyano, C₁-C₄-Mono- oder Dialkylamino, C₁-C₄-Alkylsulfonyl, C₁-C₄-Alkoxysulfonyl, Phenylsulfonyl, C₁-C₄-Alkylphenylsulfonyl, Hydroxysulfonyl, Anilino, C₁-C₄-Alkylanilino, C₁-C₄-Alkanoyl, C₁-C₄-Alkanoylamino, C₁-C₄-Alkoxycarbonyl, C₁-C₄-Alkoxycarbonylamino, Carbamoyl, C₁-C₄-N-Mono- oder N,N-Dialkylcarbamoyl, Sulfamoyl, C₁-C₄-N-Mono- oder N,N-Dialkylsulfamoyl, Ureido, durch C₁-C₄-Alkyl substituiertes Ureido, Phenoxy, Phenylthio oder den Rest 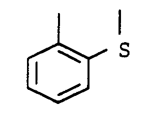
substituiert oder benzoanelliert sind, mit der Maßgabe; daß wenn
a) die Ringe A, B, C und D unsubstituiert oder durch Halogen, C₁-C₄-Alkoxy, C₁-C₄-Mono- oder Dialkylamino oder Nitro substituiert sind, n und p nicht gleichzeitig 0 bedeuten,
b) die Ringe A, B, C und/oder D unsubstituiert oder durch Halogen, C₁-C₄-Alkoxy, C₁-C₄-Mono- oder Dialkylamino oder Nitro substituiert sind und n für 1, p für 0 und Z¹ und Z² jeweils für Wasserstoff stehen, R² nicht Wasserstoff bedeutet,
c) die Ringe A, B, C und/oder D unsubstituiert oder durch Halogen, C₁-C₄-Alkoxy, C₁-C₄-Mono- oder Dialkylamino oder Nitro substituiert sind und n für 0 und p für 1 oder 2 stehen, R⁴ und R⁵ nicht gleichzeitig Wasserstoff bedeuten und
   und p für 1 oder 2 stehen, R⁴ und R⁵ nicht gleichzeitig Wasserstoff bedeuten und
d) die Ringe A, B, C und/oder D unsubstituiert oder durch Halogen, C₁-C₄-Alkoxy, C₁-C₄-Mono- oder Dialkylamino oder Nitro substituiert sind und n und p jeweils für 1 und Z¹ und Z² jeweils für Wasserstoff stehen, mindestens einer der Reste R², R⁴ und R⁵ nicht Wasserstoff bedeutet, sind neu.

Alle in den oben genannten Resten auftretetenden Alkylgruppen können sowohl geradkettig als auch verzweigt sein.

R¹ und R³ bedeuten beispielweise Methyl, Ethyl, Propyl, Isopropyl, Butyl, Isobutyl, tert-Butyl, Pentyl, 2-Methylbutyl, Hexyl, 2-Methylpentyl, Heptyl, Octyl, 2-Ethylhexyl, Isooctyl, Nonyl, Isononyl, Decyl, Isodecyl, Dodecyl, 3,5,5,7-Tetramethylnonyl, Isotridecyl, Pentadecyl, Hexadecyl, Heptadecyl, Octadecyl, Nonadecyl, Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmann, Enzyklopädie der Technischen Chemie, 4. Auflage , Band 7, Seiten 216 und 217 sowie Sand 11, Seiten 435 und 436), Benzyl, 2-Phenylethyl, Trifluormethyl, Trichlormethyl, 1,1,1-Trifluorethyl, Heptafluorpropyl, 2-Methoxyethyl, 2-Ethoxypropyl, 3-Ethoxypropyl, 3,6-Dioxaheptyl, 3,6-Dioxaoctyl, 3,6,9-Trioxadecyl, Propan-2-on-1-yl, Butan-3-on-1-yl, 2-Ethylpentan-3-on-1-yl, Carboxymethyl, 2-Carboxyethyl, 3-Carboxypropyl, 4-Carboxybutyl, 5-Carboxypentyl, 4-Carboxy-3-oxabutyl, Acetylaminomethyl, 2-(Acetylamino)ethyl, 2-(Butyrylamino)ethyl, Ethoxycarbonylmethyl, 2-(Ethoxycarbonyl)ethyl, 3-(Methoxycarbonyl)propyl, Ethoxycarbonylaminomethyl, 2-(Ethoxycarbonylamino)ethyl, 4-Methylanilinomethyl, 2-(4-Isopropylanilino)ethyl; Cyclopentyl, Cyclohexyl, Cycloheptyl, 3-Methylcycpetyl, 4-Ethylcyclohexyl, 2,3-Dichlorcyclohexyl; Phenyl, 4-Methylphenyl, 4-Isopropylphenyl, 4-Methoxyphenyl, 2,4-Dimethoxyphenyl, 2-Chlorphenyl, 4-Bromphenyl oder 4-Dimethylaminophenyl.

R², R⁴ und R⁵ in den Formeln Ia und Ib bedeuten beispielsweise Wasserstoff; C₁-C₆-Alkoxycarbonyl, wie Methoxycarbonyl, Ethoxycarbonyl, Propoxycarbonyl, Isobutoxycarbonyl, Pentyloxycarbonyl, Hexyloxycarbonyl; C₁-C₆-Carboxyalkyl, wie Carboxymethyl, 2-Carboxyethyl, 2-Carboxypropyl, 3-Carboxypropyl; Hydroxy; C₁-C₄-Alkoxy, wie Methoxy, Ethoxy, Propoxy, Isopropoxy, Butoxy; Halogen, wie Fluor, Chlor oder Brom, oder zutreffende oben unter R¹ und R³ beispielhaft aufgeführte Reste.

Z¹ und Z² in den Formeln Ia und Ib bedeuten beispielsweise jeweils Wasserstoff oder für den Fall, daß n für 1 steht auch zusammen eine gegebenenfalls durch C₁-C₄-Alkyl substituierte C₂-C₃-Alkylenkette,wie 1,2-Ethylen, 1,2-Propylen oder 1,3-Propylen; oder eine oder zwei Carbonylgruppen.

x^{⊖} in den Formeln Ia und Ib bedeutet ein anorganisches oder organisches Anion, z.B. ein Halogenid, wie Chlorid, Bromid oder Iodid; Sulfat, Perchlorat, Tetrafluoroborat, Methylsulfonat, Phenylsulfonat, 4-Methylphenylsulfonat oder Salicyclat. Die Formeln Ia und Ib sollen auch solche Naphtholactamfarbstoffe umfassen, die Betainstruktur aufweisen, d.h. bei denen die anionische Gruppe Bestandteil des Farbstoffmoleküls ist.

Beispielsweise sind folgende Substitutionsmuster am Naphtholactamsystem zu nennen:

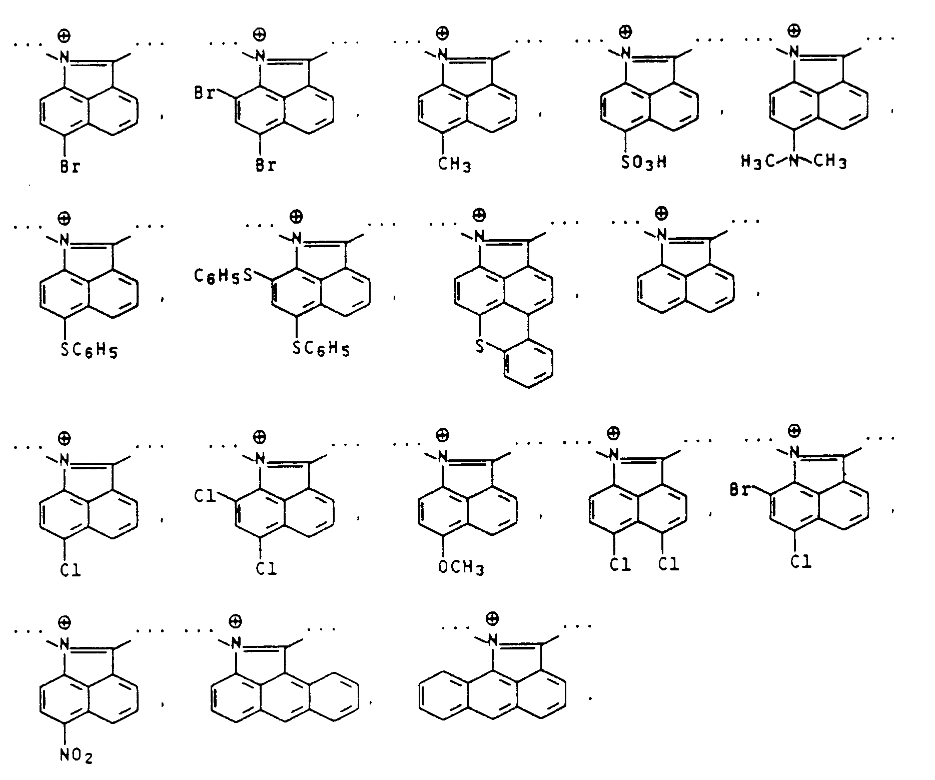

Bevorzugt sind solche Naphtholactamfarbstoffe der Formel Ia, in der R¹ und R³ gegebenenfalls durch Sauerstoffatome unterbrochenes C₁-C₁₂-Alkyl, insbesondere C₁-C₄-Alkyl, Benzyl, 2-Phenylethyl, C₅-C₆-Cycloaklyl oder Phenyl, R², R⁴ und R⁵ Wasserstoff, C₁-C₄-Alkyl, insbesondere C₁-C₂-Alkyl, C₅-C₆-Cycloalkyl, Phenyl, C₁-C₄-Alkoxycarbonyl, C₁-C₂-Carboxyalkyl Chlor oder Brom, n 1 und p 0 oder 1 bedeuten und in der die Ringe A, B, C und D unsubstituiert oder durch Methyl, Ethyl, Phenyl, C₁-C₄-Alkoxy, C₁-C₄-Alkylthio, Cyano, C₁-C₂-Dialkylamino, Chlor, Brom, Hydroxysulfonyl, Phenylthio oder der Rest 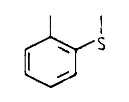
substituiert sind.
Weiterhin bevorzugt sind Naphtholactamfarbstoffe der Formel Ia, in der n 1 und p 0 oder 1 bedeuten und Z¹ und Z² jeweils für Wasserstoff oder zusammen für eine 1,2-Ethylen- oder 1,3-Propylenkette stehen.

Bevorzugte Anionen X^{⊖} sind Chlorid, Bromid, Iodid, Perchlorat, Tetrafluoroborat oder 4-Methylphenylsulfonat.

Die erfindungsgemäßen Farbstoffe werden durch Kondensation von Cycloammoniumverbindungen der Formel II 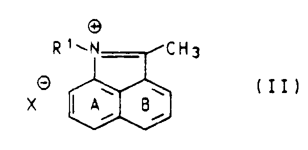
in der R¹, A, B und X^{⊖} die oben genannte Bedeutung besitzen, mit C-1, C-3 oder C-5 Bausteinen im sauren oder alkalischen Milieu in Gegenwart eines inerten Lösungsmittels bei einer Temperatur von 20 bis 150 °C hergestellt. Als C-1, C-3 und C-5 Bausteine kommen beispielsweise in Betracht.:

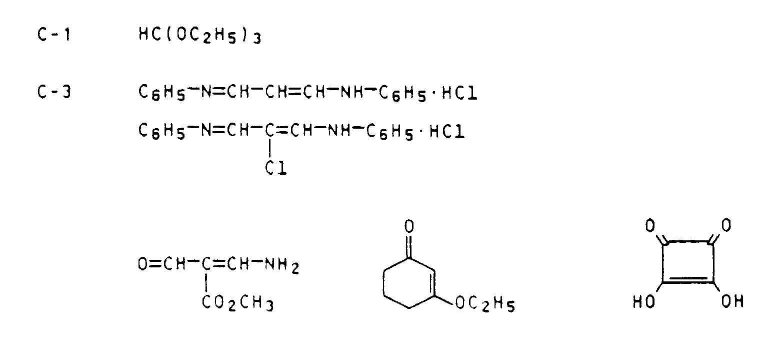

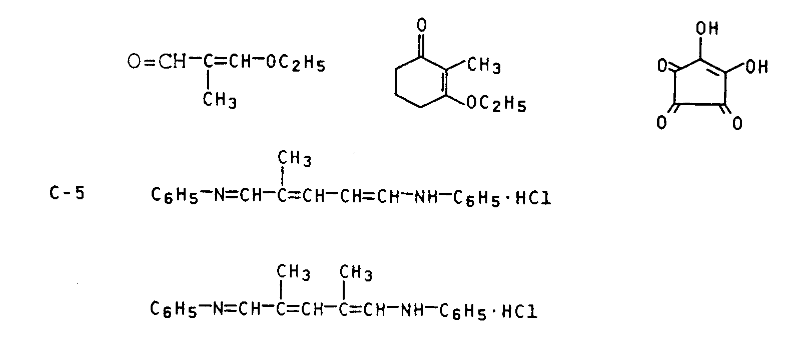

Die als Ausgangsstoffe benötigten Cycloammoniumverbindungen der Formel II sowie die C-1, C-3 und C-5 Bausteine sind bekannt oder können nach an sich bekannten Verfahren hergestellt werden.

Als inerte Lösungsmittel für die Umsetzungen sind z.B. Methanol, Ethanol, Butanol, Toluol, Xylol, Chlorbenzol,Tetrahydrofuran, Dioxan, Eisessig, Acetanhydrid oder kompatible Gemische davon geeignet.

Bei der Umsetzung der Cycloammoniumverbindungen der Formel II mit Malondialdehydbisanil-hydrochlorid oder Diphenylformamidin können bei Wahl geeigneter Reaktionsbedingungen 1:1 Umsetzungsprodukte der Formel III 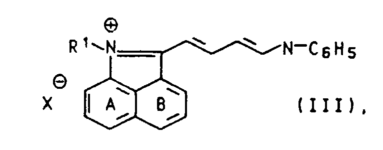
in der R¹, A, B und X^{⊖} die oben genannte Bedeutung besitzen, erhalten werden. Diese können mit weiteren Cycloammoniumverbindungen der Formel IV 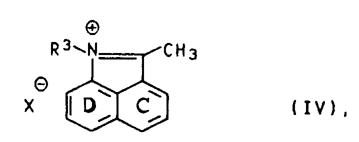
in der R³, C, D und X^{⊖} die oben genannte Bedeutung besitzen, zu symmetrischen oder unsymmetrischen Naphtholactamfarbstoffen umgesetzt werden:

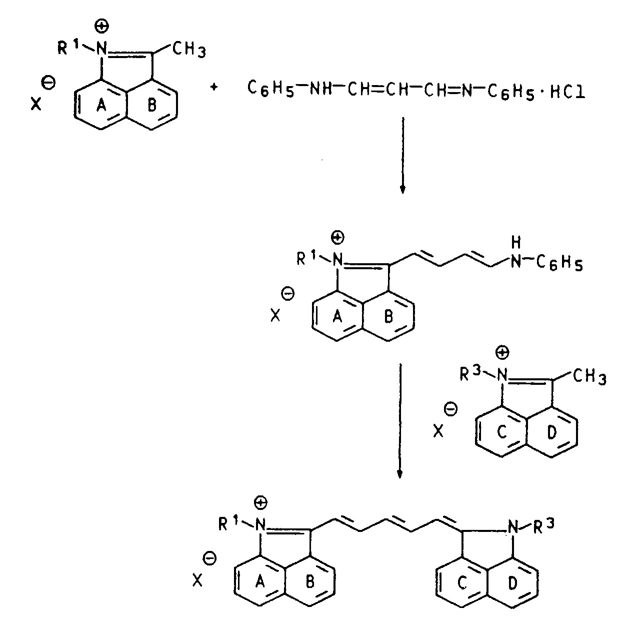

Einige symmetrische Naphtholactamfarbstoffe sind bereits bekannt und in J. Org. Chem. USSR 18, 380-386 (1982) und in Chem. Heterocyl. Comp. 9,314-315 (1973) beschrieben. Aus der SU-A-613 692 sind Laserfarbstoffe auf Basis Naphtholactam bekannt.

Die Naphtholactamfarbstoffe der Formel Ia weisen eine sehr hohe molare Absorption im Bereich von 700 bis 1200 nm auf. Sie sind in organischen Lösungsmitteln und/oder thermoplastischen oder vernetzten Kunststoffen gut löslich.

Das erfindungsgemäße Aufzeichnungssystem hat bei der Wellenlänge der Halbleiterlaser von ca. 750 bis 950 nm eine sehr hohe Absorption. Die Polymerschichten können auf eine lichtreflektierende Schicht so aufgebracht werden, daß sich glatte Absorptionsschichten von hoher optischer Oualität ergeben, die eine günstige Schwellenenergie besitzen, und in die die zu speichernde Information mit hohem Signal-zu-Rauschen-Verhältnis eingeschrieben werden kann.

Das Aufzeichnungsmedium gemäß der vorliegenden Erfindung ist mit einem Halbleiter-Laser beschreibbar und lesbar. Weiterhin ist es gegenüber atmosphärischen Einflüssen und Tageslicht sehr stabil.

Aufgrund der hohen Lichtabsorption der Farbstoffe ist das erfindungsgemäße Aufzeichnungsmedium sehr empfindlich gegenüber dem Licht des GaAlAs-Halbleiter-Lasers.

Der Aufbau von Aufzeichnungsmedien ist an sich bekannt [J. Vac. Sci. Technol. 18 (1) Jan./Feb. 1981, S. 105].

Zwischen der lichtabsorbierenden Schicht und dem Träger kann eine reflektierende Schicht vorhanden sein, so daß das eingestrahlte und durch die farbige Schicht wandernde Licht, soweit es nicht absorbiert wird, an der Reflektorschicht reflektiert wird und nochmals durch die gefärbte Schicht wandert.

Die Belichtung kann auch durch ein transparentes Substrat erfolgen. Als Schichtfolge kommt dann in Frage: Substrat-Absorberschicht- gegebenenfalls Reflektorschicht.

Die lichtreflektierende Schicht sollte so beschaffen sein, daß diese das zur Aufnahme und zur Abtastung verwendete Licht möglichtst quantitativ reflektiert. Geeignete lichtreflektierende Materialien sind z.B. Aluminium, Rhodium, Gold, Zinn, Blei, Wismut, Kupfer oder dielektrische Spiegel. Die Dicke der lichtreflektierenden Schicht soll so groß sein, daß diese das zur Aufnahme oder zum Abtasten benutzte Licht möglichst vollständig reflektiert.

Für diesen Zweck sind Spiegel mit geringer Wärmeleitfähigkeit vorteilhaft. Der Träger, bzw. die Licht reflektierende Schicht muß eine optisch glatte, ebene Oberfläche aufweisen und an der Oberfläche so beschaffen sein, daß die absorbierende Schicht darauf fest haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Das Aufbringen von metallischen Reflektionsschichten erfolgt vorzugsweise in bekannter Weise durch Aufdampfen im Vakuum oder auch durch Aufbringen geeigneter Metallfolien auf den Träger. Das Aufbringen der erfindungsgemäßen, gegen Laserlicht empfindlichen Schicht erfolgt vorzugsweise durch Aufschleudern von gelöstem oder dispergiertem Farbstoff in Gegenwart von Bindemitteln. Auch Aufrakeln oder Tauchen kommen als Verfahren zur Herstellung der Schichten in Betracht.

Für das Aufbringen der Absorptionsschichten aus Lösung bereitet man in einem geeigneten Lösungsmittel, wie Methylenchlorid, Chloroform, Tetrachlorkohlenstoff, Aceton, Methylethylketon, Cyclohexanon, Toluol, Acetonitril, Essigester, Methanol oder Mischungen dieser Lösungsmittel, eine Lösung oder gegebenenfalls eine Dispersion des Farbstoffs oder Farbstoffgemisches und des Polymeren und setzt gegebenenfalls ein Bindemittel zu.

Als Bindemittel kommen entweder durch Strahlung oder Wärme härtbare Harze, z. B. Photopolymere, Silikonharze sowie Epoxidharze oder thermoplastische Kunststoffe in Betracht.

Bevorzugt sind thermoplastische Kunststoffe mit keinem oder nur sehr geringem kristallinen Anteil und Glastemperaturen von > 35 °C, insbesondere > 75 °C. Darüberhinaus müssen die Bindemittel,wie Harze oder thermoplastische Kunststoffe, mit den Naphtholactamfarbstoffen der Formel Ib gut verträglich sein. Geeignet sind beispielsweise wasserunlösliche Bindemittel mit hohem Lösungsvermögen, für die Naphtholactamfarbstoffe, wie (Meth)-Acrylatpolymere oder -copolymere, Polystyrolhomo- oder -copolymerisate, Polyvinylcarbazol, Polyvinylestercopolymere, Polyvinylchlorid und Celluloseester.

Die Farbstoffzubereitung wird dann durch Rakeln oder Tauchen, vorzugsweise aber durch Aufschleudern auf ein vorher gereinigtes oder vorbehandeltes ("subbing-layer") Substrat aufgebracht und die Schicht an der Luft getrocknet oder gehärtet. Der Film kann auch im Vakuum, bei erhöhter Temperatur oder gegebenenfalls mit Strahlung, getrocknet bzw. gehärtet werden.

Je nach Systemaufbau wird zuerst die Farbstoff-in-Polymer-Schicht und dann der Reflektor aufgebracht oder umgekehrt verfahren. Auf das Aufbringen von Zwischen- und Schutzschichten oder einer reflektierenden Schicht kann gegebenenfalls verzichtet werden.

Sofern die Farbstoff-in-Polymer-Schicht keine ausreichende mechanische Stabilität aufweist, kann diese mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im Vakuum, insbesondere von fluorierten Polymeren, eine Schutzschicht bilden können.

Wenn das System (Datenspeicher) aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums verzichtet werden. Wenn auf Zwischenschichten nicht verzichtet werden kann, muß unter Berücksichtigung des Brechungsindex des dazu verwendeten Materials und der verwendeten Laserlichtwellenlänge deren Schichtdicke so gewählt werden, daß keine störenden Interferenzen auftreten können.

Die beim Absorbieren des Laserlichtes entstehende Wärme führt zu einem radial nach außen gerichteten Fließen des Thermoplastes und somit zur Ausbildung von kantenscharfen "Löchern" wodurch ein ausgezeichnetes Signal/Rausch-Verhalten erzielt wird.

Die nachfolgenden Beispiele sollen die Erfindung näher erläutern.

### A. Herstellung der Farbstoffe

### Beispiel 1

Eine Mischung von 3,2 g (10 mMol) 1-Ethyl-2-methyl-benzo[c,d]indoliumiodid, 0,46 g (4 mMol) 3-Ethoxy-2-methyl-2-propen-1-al, 0,42 g wasserfreies Natriumacetat und 20 ml Essigsäureanhydrid wurde 10 Minuten unter Rückfluß erhitzt. Man ließ noch abkühlen, filtrierte den Farbstoff ab, wusch mit Ethanol und Ether nach und kristallisierte aus Ethanol um. λmax (DMF) : 860 nm.

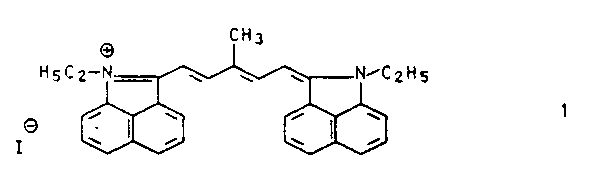

### Beispiel 2

Eine Mischung von 0,75 g (1,4 mMol) 1-Ethyl-2-methyl-6,8-diphenylthiobenzo[c,d]indoliumiodid und 0,08 g (0,7 mMol) 3-Ethoxy-2-methyl-2-propen-1-al wurde mit 0,05 g wasserfreiem Natriumacetat und 6 ml Essigsäureanhydrid 10 Minuten unter Rückfluß erhitzt. Man filtrierte ab, wusch mit Ethanol und Ether nach. λmax (DMF) : 940 nm.

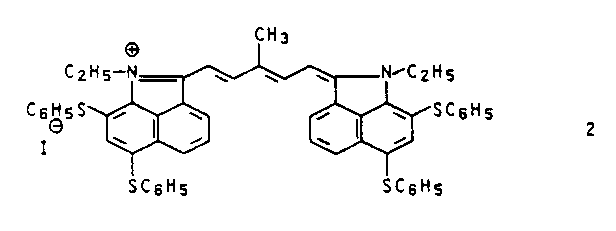

Die in der nachfolgenden Tabelle aufgeführten Farbstoffe werden in analoger Weise erhalten.

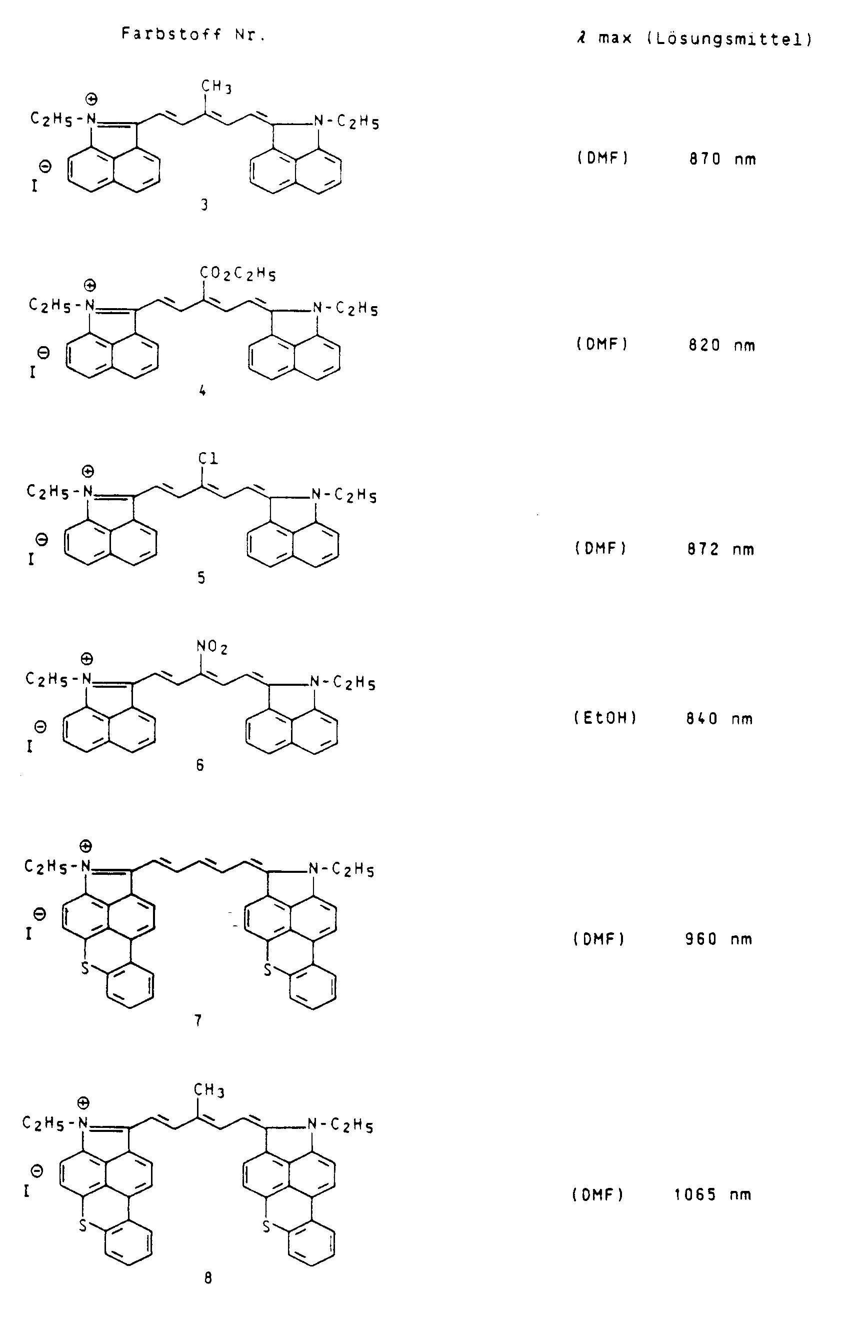

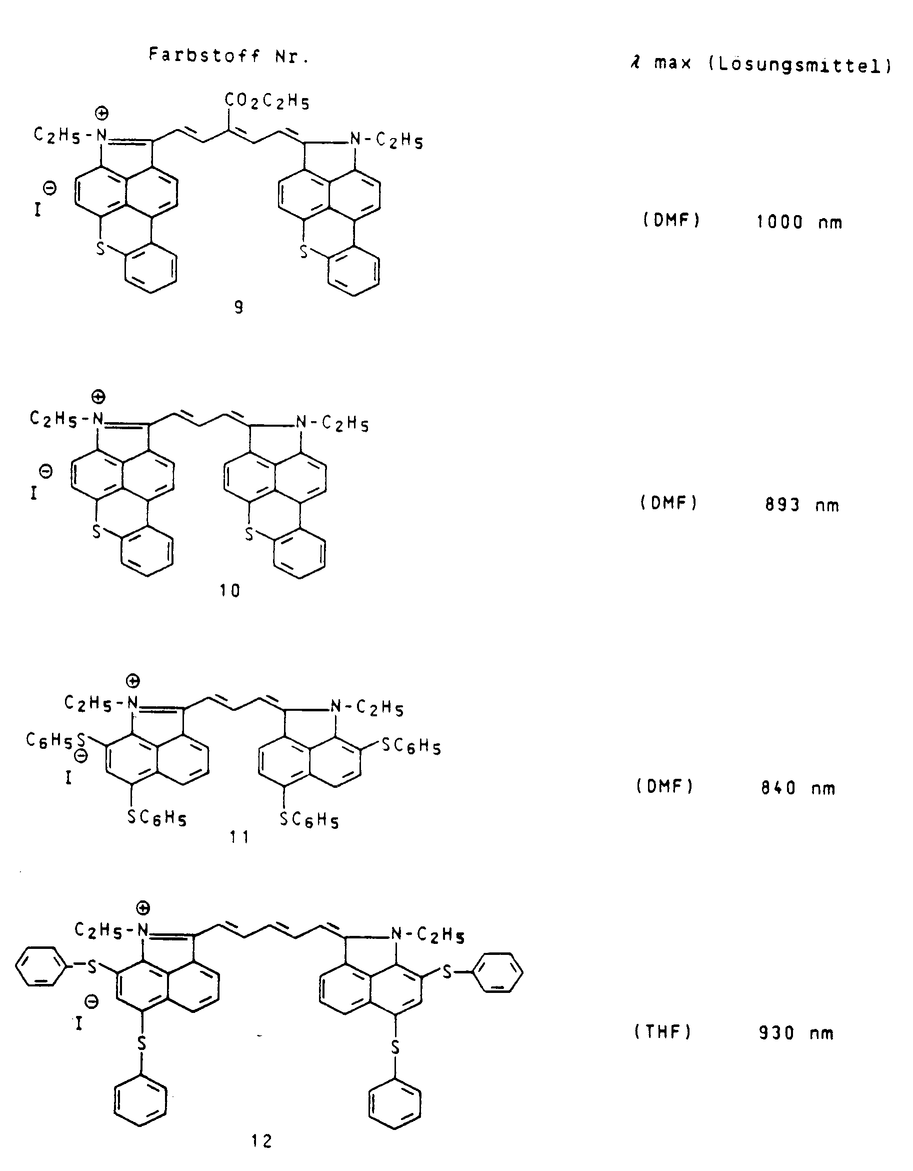

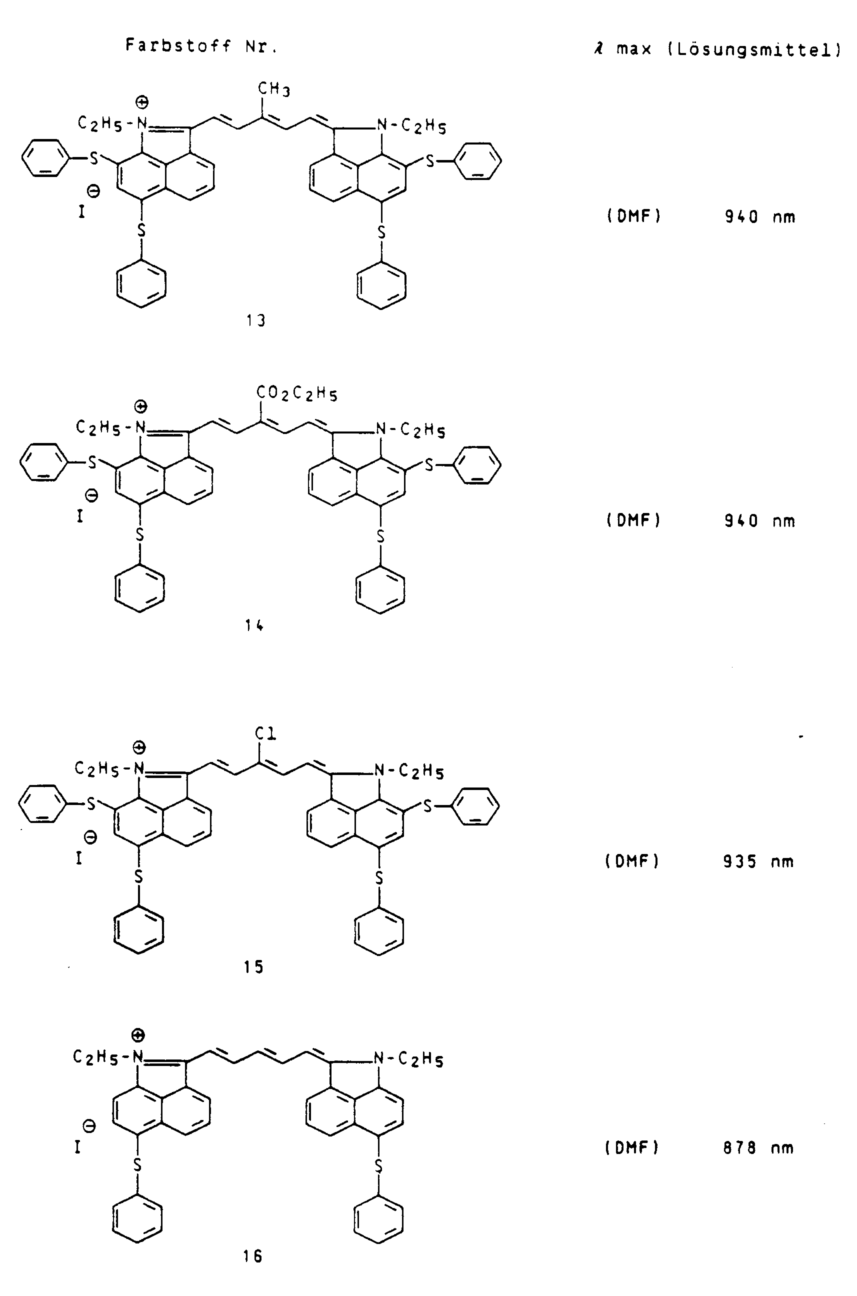

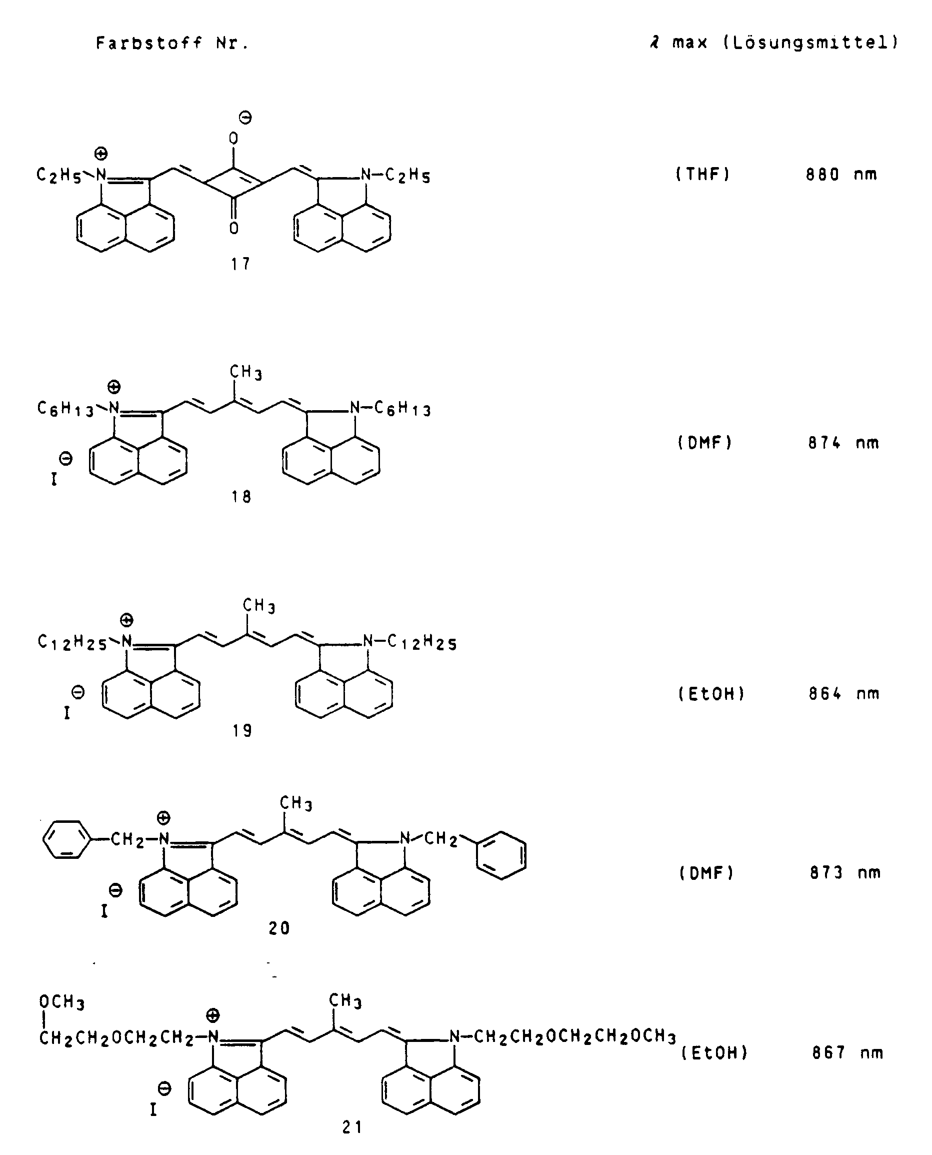

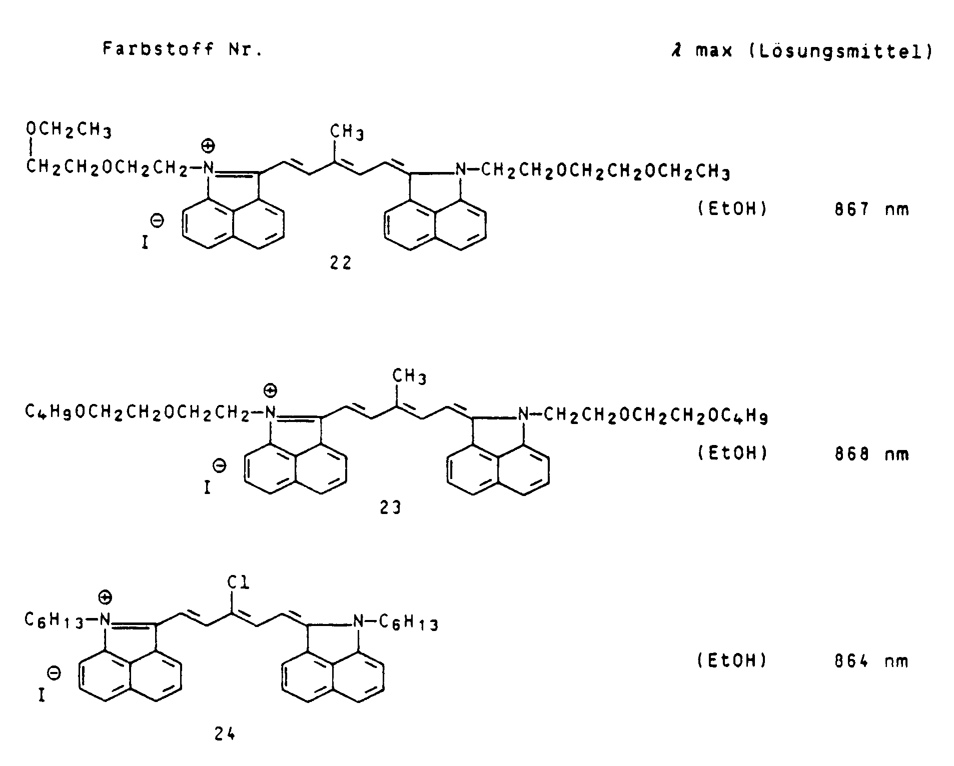

### Herstellung des optischen Aufzeichnungsmediums

1) Zwei 1,2 mm dicke Polycarbonatscheiben mit einem Durchmesser von 120 mm und einem Innenlochdurchmesser von 15 mm wurden mit Alkohol gereinigt und unter Reinraumbedingungen mit einer 0,3 µm starken Glättungsschicht aus einem Photopolymer beschichtet. Nach Aushärtung des Photopolymers mit UV-Licht wurde eine Lösung aus Farbstoff Nr. 23 und 1,3 g eines Copolymers aus Methylmethacrylat/Methacrylsäure (70 : 30) in 200 ml Essigester nach dem Schleuderbeschichtungsverfahren bei 4800 U/min auf die Platten aufgetragen. Nach dem Trocknen betrug die Schichtdicke 0,26 µm. In einer Vakuumbedampfungsapparatur wurde ein Aluminiummspiegel in einer Schichtdicke von 0,03 µm auf die Farbschicht aufgebracht und darauf eine Schutzschicht von 1,2 µm aus Polystyrol in Xylol aufgeschleudert.
   Beide Platten wurden sandwichartig mit den beschichteten Seiten nach innen über geeignete Abstandsringe zusammengeklebt, so daß ein Luftspalt von 0,4 mm verblieb. Mit einem auf einem Drehtisch montierten AlGaAs-Laser (λ = 820 nm) wurden einzelne, etwa 1 µ große Löcher in die aktive Schicht geschrieben. Die Empfindlichkeit der Schicht war besser als 1 nJ/Loch, beim Auslesen der Punkte wurde ein ausgezeichnetes Signal/Rausch-Verhältnis gefunden.
2) 0,129 g Farbstoff Nr. 23 und 1,29 g eines Bindemittels auf Basis Polymethylmethacrylat (10 gew.%-ig in Butan-2-on) wurden in 2,43 g Butan-2-on gelöst. Die Lösung wurde filtriert und nach dem Schleuderbeschichtungsverfahren bei 1000 U/min auf eine Platte aus Polymethylmethacrylat (Durchmesser: 120 mm, Innenlochdurchmesser: 15 mm) aufgebracht. Die entstandene Schicht wies eine Extinktion von 0,38 (bei 788 nm) auf.
   Mit einem auf einem Drehtisch montierten AlGaAs-Laser (λ = 820 nm) wurden einzelne, etwa 1 µ große Löcher in die aktive Schicht geschrieben. Die Empfindlichkeit der Schicht war besser als 1 nJ/Loch. Beim Auslesen der Punkte wurde ein ausgezeichnetes Signal/Rausch-Verhältnis gefunden.
3) Analog zu 2) wurde ein Aufzeichnungsmedium unter Verwendung des Farbstoffs Nr. 22 erhalten.

## Patentansprüche

1. Naphtholactamfarbstoffe der Formel Ia 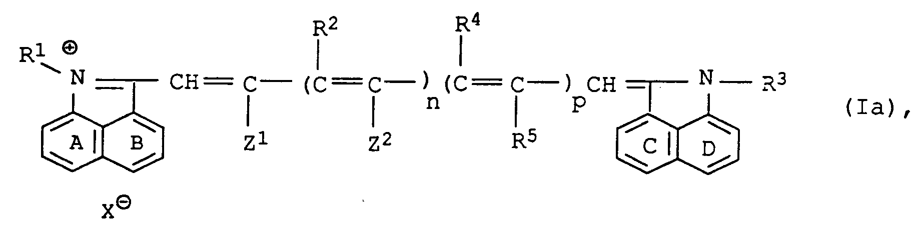 in der
R¹ und R³ gleich oder verschieden sind und unabhängig voneinander jeweils gegebenenfalls durch Phenyl, Halogen, C¹-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes und/oder durch Sauerstoffatome unterbrochenes C₄-C₂₀-Alkyl, gegebenenfalls durch C₁-C₄-Alkyl oder Halogen substituiertes C₅-C₇-Cycloalkyl oder gegebenenfalls durch C₁-C₄-Alkyl, C₁-C₄-Alkoxy, Halogen oder C₁-C₄-Dialkylamino substituiertes Phenyl,
R², R⁴ und R⁵ gleich oder verschieden sind und unabhängig voneinander jeweils Wasserstoff, gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes C₁-C₆-Alkyl, gegebenenfalls durch C₁-C₄-Alkyl oder Halogen substituiertes C₅-C₆-Cycloalkyl, gegebenenfalls durch C₁-C₄-Alkyl, C₁-C₄-Alkoxy, Halogen oder C₁-C₄-Dialkylamino substituiertes Phenyl, C₁-C₆-Alkoxycarbonyl, C₁-C₆-Carboxyalkyl, Hydroxy, C₁-C₄-Alkoxy oder Halogen,
n 0 oder 1,
Z¹ und Z² jeweils Wasserstoff oder für den Fall, daß n für 1 steht, zusammen auch eine gegebenenfalls durch C₁-C₄-Alkyl substituierte C₂-C₃-Alkylenkette oder eine oder zwei Carbonylgruppen und
X^{⊖} ein Anion bedeuten, und in der
die Ringe A, B, C und D gegebenenfalls durch C₁-C₄-Alkyl, Phenyl C₁-C₄-Alkoxy, C₁-C₂₀-Alkylthio, Halogen, Nitro, Cyano, C₁-C₄-Mono- oder Dialkylamino, C₁-C₄-Alkylsulfonyl, C₁-C₄-Alkoxysulfonyl, Phenylsulfonyl, C₁-C₄-Alkylphenylsulfonyl, Hydroxysulfonyl, Anilino, C₁-C₄-Alkylanilino, C₁-C₄-Alkanoyl, C₁-C₄-Alkanoylamino, C₁-C₄-Alkoxycarbonyl, C₁-C₄-Alkoxycarbonylamino, Carbamoyl, C₁-C₄-N-Mono- oder N,N-Dialkylcarbamoyl, Sulfamoyl, C₁-C₄-N-Mono- oder N,N-Dialkylsulfamoyl, Ureido, durch C₁-C₄-Alkyl substituiertes Ureido, Phenoxy, Phenylthio oder den Rest 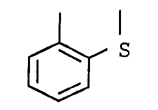 substituiert oder benzoanelliert sind, mit der Maßgabe, daß wenn
a) die Ringe A, B, C und D unsubstituiert oder durch Halogen, C₁-C₄-Alkoxy, C₁-C₄-Mono- oder Dialkylamino oder Nitro substituiert sind, n und p nicht gleichzeitig 0 bedeuten,
b) die Ringe A, B, C und/oder D unsubstituiert oder durch Halogen, C₁-C₄-Alkoxy, C₁-C₄-Mono- oder Dialkylamino oder Nitro substituiert sind und n für 1, p für 0 und Z¹ und Z² jeweils für Wasserstoff stehen, R² nicht Wasserstoff bedeutet,
c) die Ringe A, B, C und/oder D unsubstituiert oder durch Halogen, C₁-C₄-Alkoxy, C₁-C₄-Mono- oder Dialkylamino oder Nitro substituiert sind und n für 0 und p für 1 oder 2 stehen, R⁴ und R⁵ nicht gleichzeitig Wasserstoff bedeuten und
und p für 1 oder 2 stehen, R⁴ und R⁵ nicht gleichzeitig Wasserstoff bedeuten und
d) die Ringe A, B, C und/oder D unsubstituiert oder durch Halogen, C₁-C₄-Alkoxy, C₁-C₄-Mono- oder Dialkylamino oder Nitro substituiert sind und n und p jeweils für 1 und Z¹ und Z² jeweils für Wasserstoff stehen, mindestens einer der Reste R², R⁴ und R⁵ nicht Wasserstoff bedeutet.

2. Naphtholactamfarbstoffe gemäß Anspruch 1, dadurch gekennzeichnet, daß R¹ und R³ gegebenenfalls durch Sauerstoffatome unterbrochenes C₁-C₁₂-Alkyl, Benzyl, 2-Phenylethyl, C₅-C₆-Cycloalkyl oder Phenyl,
R², R⁴ und R⁵ Wasserstoff, C₁-C₄-Alkyl, C₅-C₆-Cycloalkyl, Phenyl, C₁-C₄-Alkoxycarbonyl, C₁-C₂-Carboxyalkyl, Chlor oder Brom,
n 1 und p 0 oder 1 bedeuten und die Ringe A, B, C und D unsubstituiert oder durch Methyl, Ethyl, Phenyl, C₁-C₄-Alkoxy, C₁-C₆-Alkylthio, Cyano, C₁-C₂-Dialkylamino, Chlor, Brom, Hydroxysulfonyl, Phenylthio oder den Rest 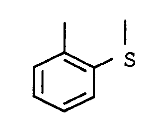 substituiert sind.

3. Naphtholactamfarbstoffe gemäß Anspruch 1, dadurch gekennzeichnet, daß n 1 und p 0 oder 1 und Z¹ und Z² zusammen für eine 1,2-Ethylen- oder 1,3-Propylenkette stehen.

4. Naphtholactamfarbstoffe gemäß Anspruch 1, dadurch gekennzeichnet, daß n 1 und p 0 oder 1 bedeuten und Z¹ und Z² jeweils für Wasserstoff stehen.

5. Optisches Aufzeichnungsmedium aus einem Träger und einer gegenüber Laserlicht empfindlichen, Farbstoff enthaltenden Schicht aus einem Polymeren, dadurch gekennzeichnet, daß das Polymere mindestens einen Naphtholactamfarbstoff der Formel Ib 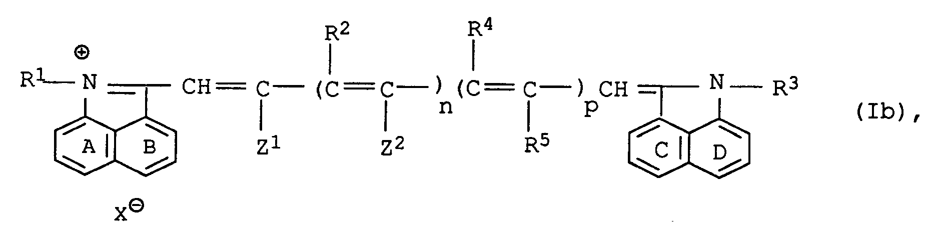 enthält, in der
R¹ und R³ gleich oder verschieden sind und unabhängig voneinander jeweils gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes und/oder durch Sauerstoffatome unterbrochenes C₁-C₂₀-Alkyl, gegebenenfalls durch C₁-C₄-Alkyl oder Halogen substituiertes C₅-C₇-Cycloalkyl oder gegebenenfalls durch C₁-C₄-Alkyl, C₁-C₄-Alkoxy, Halogen oder C₁-C₄-Dialkylamino substituiertes Phenyl,
R², R⁴ und R⁵ gleich oder verschieden sind und unabhängig voneinander jeweils Wasserstoff, gegebenenfalls durch Phenyl, Halogen, C₁-C₄-Alkanoyl, Carboxyl, C₁-C₄-Alkanoylamino, C₁-C₄-Alkoxycarbonyl, C₁-C₄-Alkoxycarbonylamino oder C₁-C₄-Alkylanilino substituiertes C₁-C₆-Alkyl, gegebenenfalls durch C₁-C₄-Alkyl oder Halogen substituiertes C₅-C₆-Cycloalkyl, gegebenenfalls durch C₁-C₄-Alkyl, C₁-C₄-Alkoxy, Halogen oder C₁-C₄-Dialkylamino substituiertes Phenyl, C₁-C₆-Alkoxycarbonyl, C₁-C₆-Carboxyalkyl, Hydroxy, C₁-C₄-Alkoxy oder Halogen,
n 0 oder 1,
p unabhängig von n 0, 1 oder 2,
Z¹ und Z² jeweils Wasserstoff oder für den Fall, daß n für 1 steht, zusammen auch eine gegebenenfalls durch C₁-C₄-Alkyl substituierte C₂-C₃-Alkylenkette oder eine oder zwei Carbonylgruppen und
X^{⊖} ein Anion bedeuten und in der
die Ringe A, B, C und D gegebenenfalls C₁-C₄-Alkyl, Phenyl C₁-C₄-Alkoxy, C₁-C₂₀-Alkylthio, Halogen, Nitro, Cyano, C₁-C₄-Mono- oder Dialkylamino, C₁-C₄-Alkylsulfonyl, C₁-C₄-Alkoxysulfonyl, Phenylsulfonyl, C₁-C₄-Alkylphenylsulfonyl, Hydroxysulfonyl, Anilino, C₁-C₄-Alkylanilino, C₁-C₄-Alkanoyl, C₁-C₄-Alkanoylamino, C₁-C₄-Alkoxycarbonyl, C₁-C₄-Alkoxycarbonylamino, Carbamoyl, C₁-C₄-N-Mono- oder N,N-Dialkylcarbamoyl, Sulfamoyl, C₁-C₄-N-Mono- oder N,N-Dialkylsulfamoyl, Ureido, durch C₁-C₄-Alkyl substituiertes Ureido, Phenoxy, Phenylthio oder den Rest 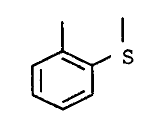 substituiert oder benzoanelliert sind.

6. Optisches Aufzeichnungsmedium gemäß Anspruch 5, dadurch gekennzeichnet, daß R¹ und R³ gegebenenfalls durch Sauerstoffatome unterbrochenes C₁-C₁₂-Alkyl, Benzyl, 2-Phenylethyl, C₅-C₆-Cycloalkyl oder Phenyl,
R², R⁴ und R⁵ Wasserstoff, C₁-C₄-Alkyl, C₅-C₆-Cycloalkyl, Phenyl, C₁-C₄-Alkoxycarbonyl, C₁-C₂-Carboxyalkyl, Chlor oder Brom,
n 1 und p 0 oder 1 bedeuten und die Ringe A, B, C und D unsubstituiert oder durch Methyl, Ethyl, Phenyl, C₁-C₄-Alkoxy, C₁-C₄-Alkylthio, Cyano, C₁-C₂-Dialkylamino, Chlor, Brom, Hydroxysulfonyl, Phenylthio oder den Rest 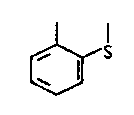 substituiert sind.

7. Optisches Aufzeichnungsmedium gemäß Anspruch 5, dadurch gekennzeichnet, daß n 1 und p 0 oder 1 bedeuten und Z¹ und Z² zusammen für eine 1,2-Ethylen- oder 1,3-Propylenkette stehen.

8. Optisches Aufzeichnungsmedium gemäß Anspruch 5, dadurch gekennzeichnet, daß n 1 und p 0 oder 1 bedeuten und Z¹ und Z² jeweils für Wasserstoff stehen.

## Claims

1. A naphtholactam dye of the formula Ia 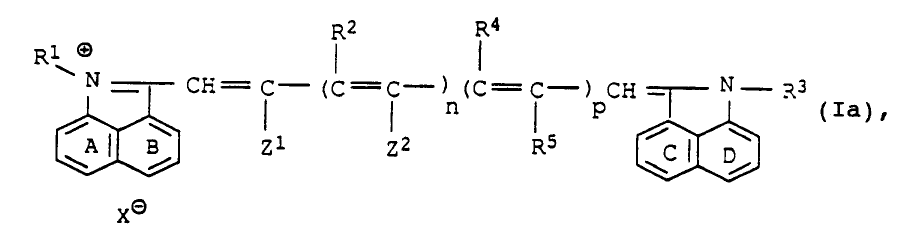 where
R¹ and R³ are identical or different and independently of one another are each C₄-C₂₀-alkyl which is unsubstituted or substituted by phenyl, halogen, C₁-C₄-alkanoyl, carboxyl, C₁-C₄-alkanoylamino, C₁-C₄-alkoxycarbonyl, C₁-C₄-alkoxycarbonylamino or C₁-C₄-alkylanilino or is interrupted by oxygen, or C₅-C₇-cycloalkyl which is unsubstituted or substituted by C₁-C₄-alkyl or halogen, or phenyl which is unsubstituted or substituted by C₁-C₄-alkyl, C₁-C₄-alkoxy, halogen or C₁-C₄-dialkylamino,
R², R⁴ and R⁵ are identical or different and independently of one another are each hydrogen, C₁-C₆-alkyl which is unsubstituted or substituted by phenyl, halogen, C₁-C₄-alkanoyl, carboxyl, C₁-C₄-alkanoylamino, C₁-C₄-alkoxycarbonyl, C₁-C₄-alkoxycarbonylamino or C₁-C₄-alkylanilino, or C₅-C₆-cycloalkyl which is unsubstituted or substituted by C₁-C₄-alkyl or halogen, or phenyl which is unsubstituted or substituted by C₁-C₄-alkyl, C₁-C₄-alkoxy, halogen or C₁-C₄-dialkylamino, or C₁-C₆-alkoxycarbonyl, C₁-C₆-carboxyalkyl, hydroxyl, C₁-C₄-alkoxy or halogen,
n is 0 or 1,
Z¹ and Z² are each hydrogen or, where n is 1, together form an unsubstituted or C₁-C₄-alkyl-substituted C₂- or C₃-alkylene chain or one or two carbonyl groups, and
X^{⊖} is an anion, and
the rings A, B, C and D are unsubstituted or substituted by C₁-C₄-alkyl, phenyl, C₁-C₄-alkoxy, C₁-C₂₀-alkylthio, halogen, nitro, cyano, C₁-C₄-mono- or dialkylamino, C₁-C₄-alkylsulfonyl, C₁-C₄-alkoxysulfonyl, phenylsulfonyl, C₁-C₄-alkylphenylsulfonyl, hydroxysulfonyl, anilino, C₁-C₄-alkylanilino, C₁-C₄-alkanoyl, C₁-C₄-alkanoylamino, C₁-C₄-alkoxycarbonyl, C₁-C₄-alkoxycarbonylamino, carbamoyl, C₁-C₄-N-mono- or N,N-dialkylcarbamoyl, sulfamoyl, C₁-C₄-N-mono- or N,N-dialkylsulfamoyl, ureido, C₁-C₄-alkyl-substituted ureido, phenoxy, phenylthio or the radical 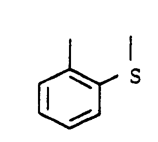 or benzofused
with the proviso that if
a) the rings A, B, C and D are unsubstituted or substituted by halogen, C₁-C₄-alkoxy, C₁-C₄-mono- or dialkylamino or nitro, n and p are not simultaneously 0,
b) the rings A, B, C and/or D are unsubstituted or substituted by halogen, C₁-C₄-alkoxy, C₁-C₄-mono- or dialkylamino or nitro, n is 1, p is 0 and Z¹ and Z² are each hydrogen, R² is not hydrogen,
c) the rings A, B, C and/or D are unsubstituted or substituted by halogen, C₁-C₄-alkoxy, C₁-C₄-mono- or dialkylamino or nitro, n is 0 and p is 1 or 2, R⁴ and R⁵ are not simultaneously hydrogen, and
d) the rings A, B, C and/or D are unsubstituted or substituted by halogen, C₁-C₄-alkoxy, C₁-C₄-mono- or dialkylamino or nitro, n and p are each 1 and Z¹ and Z² are each hydrogen, one or more of the radicals R², R⁴ and R⁵ are not hydrogen.

2. A naphtholactam dye as claimed in claim 1, wherein R¹ and R³ are each C₁-C₁₂-alkyl which may be interrupted by oxygen, or are each benzyl, 2-phenylethyl, C₅-C₆-cycloalkyl or phenyl, R², R⁴ and R⁵ are each hydrogen, C₁-C₄-alkyl,C₅ or C₆-cycloalkyl, phenyl, C₁-C₄-alkoxycarbonyl, C₁- or C₂-carboxyalkyl, chlorine or bromine, n is 1, p is 0 or 1 and the rings A, B, C and D are unsubstituted or substituted by methyl, ethyl, phenyl, C₁-C₄-alkoxy, C₁-C₆-alkylthio, cyano, C₁-C₂-dialkylamino, chlorine, bromine, hydroxysulfonyl, phenylthio or the radical

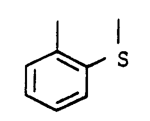

3. A naphtholactam dye as claimed in claim 1, wherein n is 1, p is 0 or 1 and Z¹ and Z² together form a 1,2-ethylene or 1,3-propylene chain.

4. A naphtholactam dye as claimed in claim 1, wherein n is 1, p is 0 or 1 and Z¹ and Z² are each hydrogen.

5. An optical recording medium consisting of a base and a laser-sensitive, dye-containing layer of a polymer, wherein the polymer contains one or more naphtholactam dyes of the formula Ib 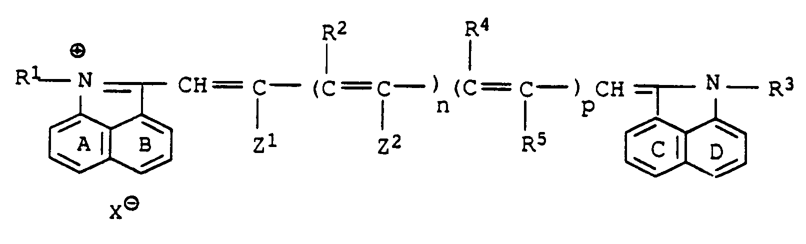 where
R¹ and R³ are identical or different and independently of one another are each C₁-C₂₀-alkyl which is unsubstituted or substituted by phenyl, halogen, C₁-C₄-alkanoyl, carboxyl, C₁-C₄-alkanoylamino, C₁-C₄-alkoxycarbonyl, C₁-C₄-alkoxycarbonylamino or C₁-C₄-alkylanilino or is interrupted by oxygen, or C₅-C₇-cycloalkyl which is unsubstituted or substituted by C₁-C₄-alkyl or halogen, or phenyl which is unsubstituted or substituted by C₁-C₄-alkyl, C₁-C₄-alkoxy, halogen or C₁-C₄-dialkylamino,
R², R⁴ and R⁵ are identical or different and independently of one another are each hydrogen, C₁-C₆-alkyl which is unsubstituted or substituted by phenyl, halogen, C₁-C₄-alkanoyl, carboxyl, C₁-C₄-alkanoylamino, C₁-C₄-alkoxycarbonyl, C₁-C₄-alkoxycarbonylamino or C₁-C₄-alkylanilino, or C₅-C₆-cycloalkyl which is unsubstituted or substituted by C₁-C₄-alkyl or halogen, or phenyl which is unsubstituted or substituted by C₁-C₄-alkyl, C₁-C₄-alkoxy, halogen or C₁-C₄-dialkylamino, or C₁-C₆-alkoxycarbonyl, C₁-C₆-carboxyalkyl, hydroxyl, C₁-C₄-alkoxy or halogen,
n is 0 or 1,
p, independently of n, is 0, 1 or 2,
Z¹ and Z² are each hydrogen or, where n is 1, may together form an unsubstituted or C₁-C₄-alkyl-substituted C₂- or C₃-alkylene chain, or one or two carbonyl groups, and
X^{⊖} is an anion, and
the rings A, B, C and D are unsubstituted or substituted by C₁-C₄-alkyl, phenyl, C₁-C₄-alkoxy, C₁-C₂₀-alkylthio, halogen, nitro, cyano, C₁-C₄-mono- or dialkylamino, C₁-C₄-alkylsulfonyl, C₁-C₄-alkoxysulfonyl, phenylsulfonyl, C₁-C₄-alkylphenylsulfonyl, hydroxysulfonyl, anilino, C₁-C₄-alkylanilino, C₁-C₄-alkanoyl, C₁-C₄-alkanoylamino, C₁-C₄-alkoxycarbonyl, C₁-C₄-alkoxycarbonylamino, carbamoyl, C₁-C₄-N-mono- or N,N-dialkylcarbamoyl, sulfamoyl, C₁-C₄-N-mono- or N,N-dialkylsulfamoyl, ureido, C₁-C₄-alkyl-substituted ureido, phenoxy, phenylthio or the radical 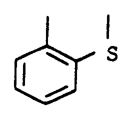 or benzofused.

6. An optical recording medium as claimed in claim 5, wherein R¹ and R³ are each C₁-C₁₂-alkyl which may be interrupted by oxygen, or are each benzyl, 2-phenylethyl, C₅- or C₆-cycloalkyl or phenyl, R², R⁴ and R⁵ are each hydrogen, C₁-C₄-alkyl, C₅- or C₆-cycloalkyl, phenyl, C₁-C₄-alkoxycarbonyl, C₁- or C₂-carboxyalkyl, chlorine or bromine, n is 1 and p is 0 or 1, and the rings A, B, C and D are unsubstituted or substituted by methyl, ethyl, phenyl, C₁-C₄-alkoxy, C₁-C₄-alkylthio, cyano, C₁-C₂-dialkylamino, chlorine, bromine, hydroxysulfonyl, phenylthio or the radical

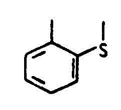

7. An optical recording medium as claimed in claim 5, wherein n is 1, p is 0 or 1 and Z¹ and Z² together form a 1,2-ethylene or 1,3-propylene chain.

8. An optical recording medium as claimed in claim 5, wherein n is 1, p is 0 or 1 and Z¹ and Z² are each hydrogen.

## Revendications

1. Colorants de la famille des naphtolactames de formule Ia 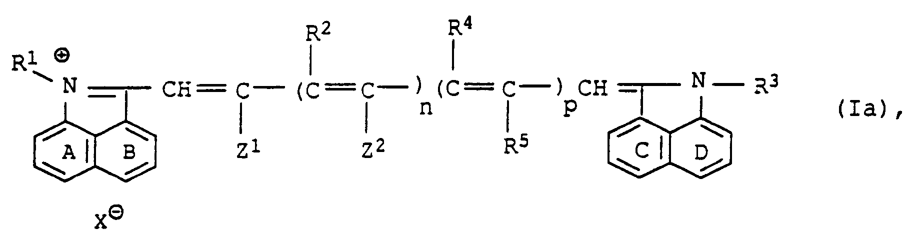 dans laquelle
R¹ et R³ sont identiques ou différents et représentent chacun, indépendamment l'un de l'autre, un radical alkyle en C₄-C₂₀ éventuellement substitué par un groupement phényle, halogéno, alcanoyle en C₁-C₄, carboxyle, (alcanoyl en C₁-C₄)amino, (alcoxy en C₁-C₄)carbonyle, (alcoxy en C₁-C₄)carbonylamino ou (alkyl en C₁-C₄)anilino et/ou interrompu par des atomes d'oxygène, un radical cycloalkyle en C₅-C₇ éventuellement substitué par un groupement alkyle en C₁-C₄ ou halogéno, ou un radical phényle éventuellement substitué par un groupement alkyle en C₁-C₄, alcoxy en C₁-C₄, halogéno ou (dialkyl en C₁-C₄)amino,
R², R⁴ et R⁵ sont identiques ou différents et représentent chacun, indépendamment les uns des autres, un atome d'hydrogène, un radical alkyle en C₁-C₆ éventuellement substitué par un groupement phényle, halogéno, alcanoyle en C₁-C₄, carboxyle, (alcanoyl en C₁-C₄)amino, (alcoxy en C₁-C₄)carbonyle, (alcoxy en C₁-C₄)carbonylamino ou (alkyl en C₁-C₄)anilino, un radical cycloalkyle en C₅-C₆ éventuellement substitué par un groupement alkyle en C₁-C₄ ou halogéno, un radical phényle éventuellement substitué par un groupement alkyle en C₁-C₄, alcoxy en C₁-C₄, halogéno ou di(alkyl en C₁-C₄)amino, un radical (alcoxy en C₁-C₆)carbonyle, carboxyalkyle en C₁-C₆, hydroxy, alcoxy en C₁-C₄ ou halogéno,
n est mis pour 0 ou 1,
p est mis, indépendamment de n, pour 0, 1 ou 2,
Z¹ et Z² représentent chacun un atome d'hydrogène ou, dans le cas où n est mis pour 1, ils peuvent aussi représenter ensemble une chaîne alkylène en C₂-C₃ éventuellement substituée par un radical alkyle en C₁-C₄ ou un ou deux groupements carbonyle, et
X^{⊖} représente un anion,
et dans laquelle
les noyaux A, B, C et D sont éventuellement substitués par des radicaux alkyle en C₁-C₄, phényle, alcoxy en C₁-C₄, (alkyl en C₁-C₂₀)thio, halogéno, nitro, cyano, mono- ou di(alkyl en C₁-C₄)amino, (alkyl en C₁-C₄)sulfonyle, (alcoxy en C₁-C₄)sulfonyle, phénylsulfonyle, (alkyl en C₁-C₄)phénylsulfonyle, hydroxysulfonyle, anilino, (alkyl en C₁-C₄)anilino, alcanoyle en C₁-C₄, (alcanoyl en C₁-C₄)amino, (alcoxy en C₁-C₄)carbonyle, (alcoxy en C₁-C₄)carbonylamino, carbamoyle, N-mono- ou N,N-di(alkyl en C₁-C₄)carbamoyle, sulfamoyle, N-mono- ou N,N-di(alkyl en C₁-C₄)sulfamoyle, uréido, uréido substitué par un reste alkyle en C₁-C₄, phénoxy, phénylthio ou par le reste 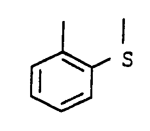 ou sont éventuellement benzocondensés, étant spécifié que
a) quand les noyaux A, B, C et D sont non substitués ou sont substitués par des atomes d'halogène ou par des radicaux alcoxy en C₁-C₄, mono- ou di(alkyl en C₁-C₄)amino ou nitro, n et p ne sont pas mis en même temps pour 0,
b) quand les noyaux A, B, C et/ou D sont non substitués ou sont substitués par des atomes d'halogène ou par des radicaux alcoxy en C₁-C₄, mono- ou di(alkyl en C₁-C₄)amino ou nitro, que n est mis pour 1, que p est mis pour 0 et que Z¹ et Z² sont mis chacun pour un atome d'hydrogène, R² ne représente pas un atome d'hydrogène,
c) quand les noyaux A, B, C et/ou D sont non substitués ou sont substitués par des atomes d'halogène ou par des radicaux alcoxy en C₁-C₄, mono- ou di(alkyl en C₁-C₄)amino ou nitro, que n est mis pour 0 et que p est mis pour 1 ou 2, R⁴ et R⁵ ne représentent pas en même temps des atomes d'hydrogène, et
d) quand les noyaux A, B, C et/ou D sont non substitués ou sont substitués par des atomes d'halogène ou par des radicaux alcoxy en C₁-C₄, mono- ou di(alkyl en C₁-C₄)amino ou nitro, que n et p sont mis chacun pour 1 et que Z¹ et Z² sont mis chacun pour un atome d'hydrogène, l'un au moins des restes R², R⁴ et R⁶ ne représente pas un atome d'hydrogène.

2. Colorants de la famille des naphtolactames selon la revendication 1, caractérisés en ce que R¹ et R³ représentent des radicaux alkyle en C₁-C₁₂ éventuellement interrompus par des atomes d'oxygène, benzyle, 2-phényléthyle, cycloalkyle en C₅-C₆ ou phényle,
R², R⁴ et R⁵ représentent des atomes d'hydrogène, des radicaux alkyle en C₁-C₄, cycloalkyle en C₅-C₆, phényle, (alcoxy en C₁-C₄)carbonyle, carboxyalkyle en C₁-C₂ ou des atomes de chlore ou de brome,
n est mis pour 1 et p pour 0 ou 1, et les noyaux A, B, C et D sont non substitués ou substitués par des radicaux méthyle, éthyle, phényle, alcoxy en C₁-C₄, (alkyl en C₁-C₆)thio, cyano, di(alkyl en C₁-C₂)amino, chloro, bromo, hydroxysulfonyle, phénylthio ou par le reste

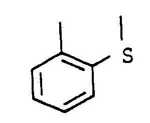

3. Colorants de la famille des naphtolactames selon la revendication 1, caractérisés en ce que n est mis pour 1, p pour 0 ou 1 et Z¹ et Z² sont mis ensemble pour une chaîne 1,2-éthylène ou 1,3-propylène.

4. Colorants de la famille des naphtolactames selon la revendication 1, caractérisés en ce que n est mis pour 1, p pour 0 ou 1 et Z¹ et Z² représentent chacun un atome d'hydrogène.

5. Support d'enregistrement optique, se composant d'un substrat et d'une couche en un polymère, contenant un colorant et sensible à la lumière du laser, caractérisé en ce que le polymère contient au moins un colorant de la famille des naphtolactames de formule Ib 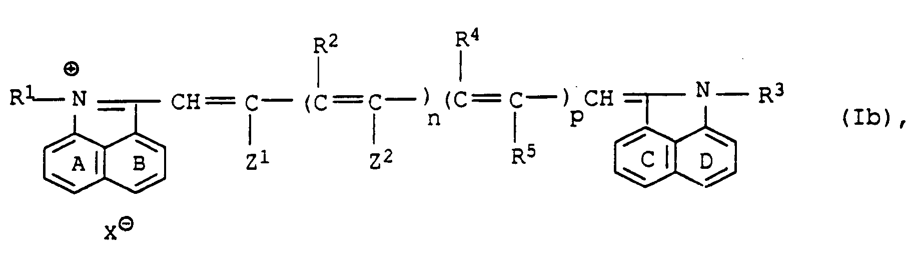 dans laquelle
R¹ et R³ sont identiques ou différents et représentent chacun, indépendamment l'un de l'autre, un radical alkyle en C₄-C₂₀ éventuellement substitué par un groupement phényle, halogéno, alcanoyle en C₁-C₄, carboxyle, (alcanoyl en C₁-C₄)amino, (alcoxy en C₁-C₄)carbonyle, (alcoxy en C₁-C₄)carbonylamino ou (alkyl en C₁-C₄)anilino et/ou interrompu par des atomes d'oxygène, un radical cycloalkyle en C₅-C₇ éventuellement substitué par un groupement alkyle en C₁-C₄ ou halogéno, ou un radical phényle éventuellement substitué par un groupement alkyle en C₁-C₄, alcoxy en C₁-C₄, halogéno ou (dialkyl en C₁-C₄)amino,
R², R⁴ et R⁵ sont identiques ou différents et représentent chacun, indépendamment les uns des autres, un atome d'hydrogène, un radical alkyle en C₁-C₆ éventuellement substitué par un groupement phényle, halogéno, alcanoyle en C₁-C₄, carboxyle, (alcanoyl en C₁-C₄)amino, (alcoxy en C₁-C₄)carbonyle, (alcoxy en C₁-C₄)carbonylamino ou (alkyl en C₁-C₄)anilino, un radical cycloalkyle en C₅-C₆ éventuellement substitué par un groupement alkyle en C₁-C₄ ou halogéno, un radical phényle éventuellement substitué par un groupement alkyle en C₁-C₄, alcoxy en C₁-C₄, halogéno ou di(alkyl en C₁-C₄)amino, un radical (alcoxy en C₁-C₆)carbonyle, carboxyalkyle en C₁-C₆, hydroxy, alcoxy en C₁-C₄ ou halogéno,
n est mis pour 0 ou 1,
p est mis, indépendamment de n, pour 0, 1 ou 2,
Z¹ et Z² représentent chacun un atome d'hydrogène ou, dans le cas où n est mis pour 1, ils peuvent aussi représenter ensemble une chaîne alkylène en C₂-C₃ éventuellement substituée par un radical alkyle en C₁-C₄ ou un ou deux groupements carbonyle, et
X^{⊖} représente un anion,
et dans laquelle
les noyaux A, B, C et D sont éventuellement substitués par des radicaux alkyle en C₁-C₄, phényle, alcoxy en C₁-C₄, (alkyl en C₁-C₂₀)thio, halogéno, nitro, cyano, mono- ou di(alkyl en C₁-C₄)amino, (alkyl en C₁-C₄)sulfonyle, (alcoxy en C₁-C₄)sulfonyle, phénylsulfonyle, (alkyl en C₁-C₄)phénylsulfonyle, hydroxysulfonyle, anilino, (alkyl en C₁-C₄)anilino, alcanoyle en C₁-C₄, (alcanoyl en C₁-C₄)amino, (alcoxy en C₁-C₄)carbonyle, (alcoxy en C₁-C₄)carbonylamlno, carbamoyle, N-mono- ou N,N-di(alkyl en C₁-C₄)carbamoyle, sulfamayle, N-mono- ou N,N-di(alkyl en C₁-C₄)sulfamoyle, uréido, uréido substitué par un reste alkyle en C₁-C₄, phénoxy, phénylthio ou par le reste 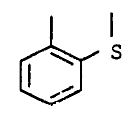 ou sont éventuellement benzocondensés.

6. Support d'enregistrement optique selon la revendication 5, caractérisé en ce que R¹ et R³ représentent des radicaux alkyle en C₁-C₁₂ éventuellement interrompus par des atomes d'oxygène, benzyle, 2-phényléthyle, cycloalkyle en C₅-C₆ ou phényle,
R², R⁴ et R⁵ représentent des atomes d'hydrogène, des radicaux alkyle en C₁-C₄, cycloalkyle en C₅-C₆, phényle, (alcoxy en C₁-C₄)carbonyle, carboxyalkyle en C₁-C₂ ou des atomes de chlore ou de brome,
n est mis pour 1 et p pour 0 ou 1, et les noyaux A, B, C et D sont non substitués ou substitués par des radicaux méthyle, éthyle, phényle, alcoxy en C₁-C₄, (alkyl en C₁-C₆)thio, cyano, di(alkyl en C₁-C₂(amino, chloro, bromo, hydroxysulfonyle, phénylthio ou par le reste

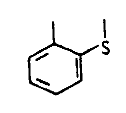

7. Support d'enregistrement optique selon la revendication 5, caractérisé en ce que n est mis pour 1, p pour 0 ou 1 et Z¹ et Z² sont mis ensemble pour une chaîne 1,2-éthylène ou 1,3-propylène.

8. Support d'enregistrement optique selon la revendication 5, caractérisé en ce que n est mis pour 1, p pour 0 ou 1 et Z¹ et Z² représentent chacun un atome d'hydrogène.
